# EUROPEAN PATENT APPLICATION

(11) **EP 1 210 967 A1**
(43) Date of publication of application: **05.06.2002**
(21) Application number: 01127325.7
(22) Date of filing: 20.11.2001
(51) Int. Cl.: B01D 53/26

(54) **Compressed air dryer**

(30) Priority: 01.12.2000 IT MI002602
(71) Applicant: ING. ENEA MATTEI S.p.A., I-20090 Vimodrone Milano (IT)
(72) Inventor: Greco Manuli, Vincenzo, 20092 Cinisello Balsamo, Milano (IT)
(74) Representative: Petruzzelli, Antonio European Patent Attorney

(57) **Abstract**

Compressed air dryer apparatus comprising a circuit for dehumidification of the compressed air which in turn provides means for cooling the air to a predefined dew point, a separator (21) of the condensation water from the compressed air downstream of said means for cooling the compressed air, and an economiser (13) for pre-cooling the air to be dried which enters the dehumidification circuit via the dried air leaving the dehumidification circuit, characterised in that said means for cooling the air comprise one or more Peltier elements (7) having the cold operative side (9) in thermal communication with the air to be dried of the dehumidification circuit and the hot side (11) directly in contact with a heat dissipater (15) cooled by a flow of ambient air, and in that a circuit (23) is also comprised which recovers the condensation water discharged by the condensation separator (21) and sends it in an atomised form onto said dissipater (15) to assist cooling thereof in such a way as to increase the efficiency of the dryer.

## Description

The present invention relates to a dryer for compressed air in a system for compressed air.

The currently most widespread apparatuses for dehumidifying compressed air are of the refrigeration cycle type. As known they have a closed circuit wherein a coolant fluid is constantly made to circulate and which, in relation to changes in state, is capable of cooling the compressed air to the dew point required.

The most common problems for dryer apparatuses of the refrigeration cycle type consist of guaranteeing tightness of the circuit in such a way as to avoid leakage of coolant fluid, of the environmental impact of the cooling fluid, and of the maintenance of the parts which allow the coolant fluid to perform the refrigeration cycle, that is to say the compressor, evaporator, condenser and lamination part.

The object of the present invention is therefore that of providing a dryer for compressed air which partially or completely eliminates the known disadvantages, and a further object of the invention is that of providing dryer apparatus for compressed air which is also efficient and with low environmental impact.

These objects are achieved by compressed air dryer apparatus comprising an air dehumidification circuit which in turn provides means for cooling the air to a predefined dew point, a separator of the condensation water from the compressed air downstream of said means for cooling the compressed air, and an economiser for pre-cooling the air to be dried entering the dehumidification circuit via the dried air leaving the dehumidification circuit, characterised in that said means for cooling the air comprise one or more Peltier elements having the cold operative side in thermal communication with the air to be dried of the dehumidification circuit and the warm side directly in contact with a heat dissipater cooled by a flow of ambient air, and in that a circuit is also comprised which recovers the condensation water discharged by the condensation separator and sends it in an atomised form onto said dissipater to assist cooling thereof.

The use of one or more Peltier elements for dehumidifying compressed air eliminates all the disadvantages linked to dryer apparatus of the refrigeration cycle type, above all due to the fact that it does not have mechanical parts or moving fluids.

The efficiency of the dryer apparatus of the present invention can be maintained high also for medium-high capacities of air to be dried thanks to the recovery of the energy content of the condensation which allows the hot side of the Peltier element or elements to be cooled to a temperature lower than the ambient one.

These and other aspects will be made clearer on reading the following preferred embodiment of the invention, to be read by way of a non-limiting example of the more general principle claimed.

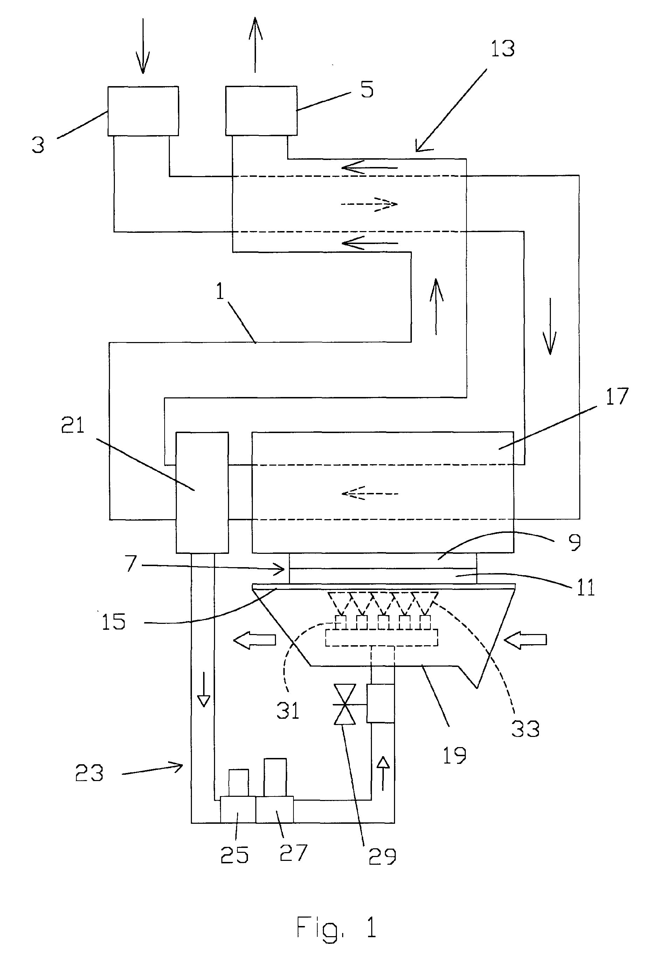

The following description refers to the single accompanying drawing of Figure 1 which is a schematic representation of the circuit for dehumidification of compressed air in accordance with a preferred embodiment of the invention, wherein the paths of the compressed air, of the condensation separated from the dried compressed air, and of the cooling ambient air of the dissipater are indicated by relevant arrows.

In Figure 1 the circuit for dehumidification of the compressed air is formed by a conduit 1 having a section 3 for entrance of the compressed air to be dried and a section 5 for exit of the dried compressed air.

Cooling of the compressed air to required dew point temperature is achieved by means of a Peltier element 7 inserted in an appropriate point of the air dehumidification circuit. Naturally more than one Peltier element can be used as required.

As known, the functioning of a Peltier element is based on the thermoelectric effect whereby, if in a circuit formed by two different metal semiconductor or conductor elements an electric current is circulated, one junction tends to heat while the other tends to cool.

The cold operative side 9 of the Peltier element 7 is thermally in contact with the compressed air conduit 1, while the hot side 11 of the Peltier element 7 is placed directly in contact with one side of a heat dissipater 15 preferably in aluminium, given its high heat conductivity, lightness and economical nature.

The exchange of heat between the cold operative side 9 of the Peltier element and the compressed air conduit 1 can take place directly or, as illustrated in Figure 1, via an intermediate element 17 capable of accumulating the cold (and for this reason defined as energy accumulation) generated by the cold operative side 9 of the Peltier cell 7 to transmit it subsequently to the compressed air to be dried.

A continuous flow of ambient air moved by a fan (not shown) is collected by a special conveyor 19 and sent onto the free side of the dissipater 15 for the cooling thereof.

Downstream of the Peltier element 7 the circuit for dehumidification of the compressed air provides a separator 21 of the condensation which is created as a result of the heat exchange between the compressed air and the cold operative side 9 of the Peltier element 7.

The circuit for dehumidification of the compressed air finally provides an economiser 13 for pre-cooling of the air to be dried. The economiser 13 is a counter-current heat exchanger formed between one section of the conduit 1 upstream and a section of the conduit 1 downstream of the Peltier element 7.

An outstanding feature of the present invention is represented by the recovery of the thermal energy present in the condensation separated by the condenser 21 in order to cool the dissipater 15 to a temperature lower than the ambient one, obtained by introducing a circuit 23 for recovery of the condensation water which connects the outlet of the separator 21 to the free surface of the dissipater 15. This leads to an improvement in the cooling efficiency of the dryer apparatus, which notoriously increases when the difference in temperature between the cold face 9 and the hot face 11 of the Peltier element 7 decreases.

In cooling the dissipater 15 through the condensation water separated from the compressed air account has to be taken of the fact that the condensation of a compressor is usually soiled because it contains dust and/or oil which could deposit on the free side of the dissipater 15, thus worsening transmission of heat. For this reason, in the circuit 23 for recovery of the condensation a mechanical filter 25 is inserted to block the dust particles present in the condensation, and downstream of the mechanical filter 25 an activated carbon absorber filter 27 to block the particles of oil present in the condensation.

In the circuit 23 for recovery of the condensation, downstream of the activated carbon filter 27 a solenoid valve 29 is present for discharge of the condensation and which can be actuated to send the condensation to a system of pulveriser nozzles 31 which in turn direct the pulverised condensation 33 onto the free side of the dissipater 15 in such a way that thermal energy is removed from the dissipater 15 in the form of latent vaporisation heat of the pulverised condensation.

For dimensioning of the dryer apparatus account is to be taken: of the capacity of the air to be dried, which in industrial applications varies from 500 l/min. to 50000 l/min., with the highest product volumes occurring in the range between 500 l/min. and 5000 l/min.; of the relative humidity of the air entering the compressor, on average equal to 60%; of the temperature and pressure of suction of the compressor, equal to 20°C and 1 bar respectively; of the temperature, pressure and relative humidity conditions respectively of the compressed air entering the dryer apparatus, equal to 35°C, 7 bar or 10 bar, and 100% respectively; of the dew point required by users, on average between 3°C and 6°C; and of the thermal power to be removed, equal to the sum of the sensitive thermal power, that is to say that required for lowering the temperature of the air from that entering the dryer to the dew one, and of the latent thermal power linked to condensation of the steam during cooling.

The dryer of the present invention is to be installed between the compressor and the tank when removal of compressed air from the tank is highly variable and with values much higher or smaller than the flow rate of the compressor, while it is to be installed downstream of the compressor when the consumption of air at use is virtually constant and equal to the maximum flow rate of the compressor.

## Claims

1. Compressed air dryer apparatus comprising a circuit for dehumidification of the compressed air which in turn provides means for cooling the air to a predefined dew point, a separator (21) of the condensation water from the compressed air downstream of said means for cooling the compressed air, and an economiser (13) for pre-cooling the air to be dried entering the dehumidification circuit via the dried air leaving the dehumidification circuit, **characterised in that** said means for cooling the air comprise one or more Peltier elements (7) having the cold operative side (9) in thermal communication with the air to be dried of the dehumidification circuit and the hot side (11) directly in contact with a heat dissipater (15) cooled by a flow of ambient air, and **in that** a circuit (23) is also comprised which recovers the condensation water discharged by the condensation separator (21) and sends it in an atomised form onto said dissipater (15) to assist cooling thereof in such a way as to increase the overall efficiency of the dryer.

2. Dryer apparatus according to the previous claim, **characterised in that** the thermal communication between the cold operative side (9) of said one or more Peltier elements (7) and the compressed air of the dehumidification circuit is formed by placing the cold operative side (9) of said one or more Peltier elements (7) and the circuit for dehumidification of the compressed air in contact one with the other, directly or indirectly, by means of an intermediate element (17) defining an accumulation of energy.

3. Dryer apparatus according to any one of the previous claims, **characterised in that** in said circuit (23) for recovery of the condensation a mechanical filter (25) is provided for blocking the particles of dust present in the condensation.

4. Dryer apparatus according to the previous claim, **characterised in that** in said circuit (23) for recovery of the condensation, downstream of said mechanical filter (25), an activated carbon absorber filter (27) is provided for blocking the particles of oil present in the condensation.

5. Dryer apparatus according to the previous claim, **characterised in that** in said circuit (23) for recovery of the condensation, downstream of said activated carbon filter (27), a solenoid valve (29) is provided for discharging the condensation.

6. Dryer apparatus according to the previous claim, **characterised in that** in said circuit (23) for recovery of the condensation, downstream of said solenoid valve (29) for discharging the condensation, a system of pulveriser nozzles (31) suitable for spraying the condensation in a pulverised form onto said dissipater (45) is provided.
